Europäisches Patentamt

European Patent Office

Office européen des brevets

(19)

(11) Veröffentlichungsnummer : **0 049 906**
**B1**

(12) # EUROPÄISCHE PATENTSCHRIFT

(45) Veröffentlichungstag der Patentschrift :
**13.06.84**

(21) Anmeldenummer : **81108315.3**

(22) Anmeldetag : **14.10.81**

(51) Int. Cl.³ : **E 04 B   1/60**, E 04 B   1/86,
E 04 B   2/06

(54) **Vorrichtung zum Aufbau von Schallschutzwänden.**

(30) Priorität : **15.10.80 DE 3038862**

(43) Veröffentlichungstag der Anmeldung :
**21.04.82 Patentblatt 82/16**

(45) Bekanntmachung des Hinweises auf die Patenterteilung : **13.06.84 Patentblatt 84/24**

(84) Benannte Vertragsstaaten :
**AT BE CH DE FR GB IT LI LU NL SE**

(56) Entgegenhaltungen :
**CH-A-   597 451**
**DE-A- 2 042 888**
**DE-A- 2 751 520**
**DE-A- 2 911 309**

(73) Patentinhaber : **Lindhorst, Alfred**
**Heideweg 12**
**D-5678 Wermelskirchen (DE)**

(72) Erfinder : **Emmerich, Bernd**
**Alte Markstrasse 13**
**D-4630 Bochum (DE)**

(74) Vertreter : **Herrmann-Trentepohl, Werner, Dipl.-Ing. et
al**
**Schaeferstrasse 18**
**D-4690 Herne 1 (DE)**

**Beschreibung**

Die Erfindung betrifft eine Vorrichtung nach dem Oberbegriff des Anspruches 1.

Schallschutzwände bzw. -kabinen werden vor allem in Werkhallen zum Abschirmen von Lärmquellen, z. B. in Druckereien von Druckmaschinen eingesetzt. Sie bestehen aus Platten, welche in der Regel eine Einlage aus schalldämmenden Werkstoff zwischen eine Außen- und einer Innenplatte aufweisen, wobei die der Lärmquelle zugeordnete Innenplatte perforiert ist. Die Randleisten bilden einen Rahmen, der die beschriebenen Teile der Plattenelemente zusammenhält und außerdem die erforderliche Steifigkeit herbeiführen, um den Zusammenhalt der Platten im montierten Zustand der Wand bzw. Kabinen in der Regel ohne besondere Unterstützungskonstruktion zu gewährleisten. Die Montage der Platten setzt dann jedoch voraus, daß man die endgültige Stellung der Platten zueinander zunächst fixieren kann, bevor man die endgültige Verschraubung anbringt. Die Abdeckleisten verkleiden die Einzelteile der Befestigungen der Plattenelemente und sollen so mit den anderen Teilen einer Befestigung benachbarter Plattenelemente zusammenwirken, daß das Entstehen von Schallbrücken verhindert wird.

Solche Vorrichtungen sind an sich bekannt (DE-A-27 51 520). Bei einer Vorrichtung dieser Art sind die Klemmbügel U-förmige Federklammern, denen in den Außenschenkeln der zumeist C-förmigen Randleisten Schlitze zugeordnet sind, in die die Klammern mit ihren Schenkeln eingreifen und auf diese Weise den Fugenabstand der Platten herstellen, der mit dem Schaftdurchmesser einer Befestigungsschraube vorgegeben ist, welche die Fuge durchgreift. Diese Schraube hat auf einer Seite einen scheibenförmigen Kopf und endet beiderseits in Gewindelängen ; auf eine dierser Längen ist eine auf der zugeordneten Klammer abstützbare Mutter aufzuschrauben. Auf beide Gewindelängen läßt sich je eine Hutmutter zur Befestigung der Abdeckleiste schrauben, die mit einer Polsterung zusammenwirkt.

Schrauben der beschriebenen Art liegen außerhalb der Norm und stellen daher teuere Sonderanfertigungen dar. Die Federbügel sind ihrerseits verhältnismäßig komplizierte Teile mit entsprechendem Fertigungsaufwand. Die maßgerechte Anordnung der Schlitze in den Randleisten benachbarter Plattenelemente macht erhebliche Schwierigkeiten, insbesondere wenn diese erst an Ort und Stelle hergestellt werden müssen.

Der Erfindung liegt die Aufgabe zugrunde, den Fertigungsaufwand für die Befestigungsmittel zu senken und die Arbeiten für deren Anbringungen an den Randleisten der Plattenelemente zu vereinfachen.

Diese Aufgabe wird durch das Kennzeichen des Anspruches 1 gelöst.

Da man für die Klemmbügel ebene Platten verwendet, kann man auf federnde Eigenschaften und Anwendung besonderer Formgebungsschritte bei der Herstellung der Platten verzichten. Diese Platten lassen sich aus Flacheisenabschnitten herstellen. Da man auf diese Weise auf eine Montage der von den Platten gebildeten Klemmbügel vor Anbringung der Verschraubung verzichtet, braucht man die Verschraubung auch nicht durch die Fuge zu führen und kann deswegen einfache Schraubenbolzen verwenden, welche die ihnen jeweils zugeordnete Randleiste durchdringen. Daher können sich die Atbeiten an den Randleisten auf das Einbringen von maßgerechten Bohrungen beschränken, die auch an Ort und Stelle mit Handbohrmaschinen leicht hergestellt werden können. Da man für die Klemmbügel einfache, d. h. insbesondere genormte Schrauben verwendet, benutzt man für das Anbringen der Fugenabdeckleiste ebenfalls Normschrauben, für die in dem betreffenden Klemmbügel eine Ausnehmung vorgesehen ist.

Für sich bekannt (DE-A-29 11 309) ist eine Vorrichtung, die zum Aufbau der Wände von Kühl- und/oder thermisch isolierten Kammern dient, sich aber für den Aufbau von Schallschutzwänden nicht eignet. Diese Verbindung geht von Elementen aus, deren Stirnseiten sich berühren. Sie sieht an jeder Verbindungsstelle eine Leiste mit Durchgangsloch und mit einer Senkung, sowie eine zweite Leiste mit Innengewinde vor. Die Herstellung solcher Leisten ist schwierig und legt im übrigen die Lage der Verbindungsschrauben fest, so daß diese an Ort und Stelle nicht korrigiert werden kann.

Bekannt war ferner eine Verbindung (DE-A-20 42 888) für schallschutz- oder wärmedämmende Plattenelemente, welche in den Ecken von vier benachbarten Elementen platte Laschen vorsieht, welche runde Aussparungen für Maschinenschrauben mit Sechskantkopf aufweisen. Diese Verbindung schließt Fugen zwischen den Elementen ebenfalls aus. Sie können nur an in den Ecken zusammenstoßenden Plattenelementen gleichzeitig und nicht über die Länge der Elemente verteilt angebracht werden. Ihre Montage ist schwierig, weil der Schraubenkopf von innen festgehalten werden muß, um die Mutter von außen verspannen zu können.

Vorzugsweise gestaltet man die Erfindung mit den Merkmalen des Anspruches 2 aus. Man erhält dann eine verhältnismäßig einfache Plattenausführung und kann die Fuge auf beiden Seiten mit je einer Platte offen halten.

Die Einzelheiten, weitere Merkmale und andere Vorteile der Erfindung ergeben sich aus der nachfolgenden Beschreibung einer Ausführungsform anhand der Figuren in der Zeichnung ; es zeigen

Figur 1 im Querschnitt eine Fuge zwischen benachbarten Plattenelementen bei fertig montierter Vorrichtung gemäß der Erfindung,

Figur 2 eine Draufsicht auf eine der einen Klemmbügel bildenden Platten,

Figur 3 in der Figur 2 entsprechender Darstellung die dazugehörige weitere Platte und

Figur 4 die Darstellung eines Rasters unter Verwendung der Vorrichtung nach den Figuren 1 bis 3.

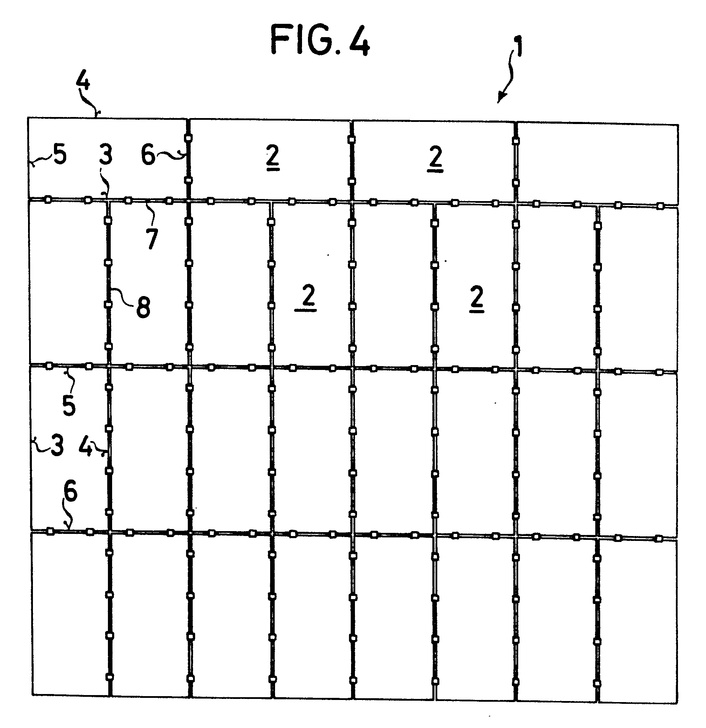

Gemäß der Figur 4 ist eine Schallschutzwand 1 aus kongruenten Plattenelementen 2 zusammengesetzt. Gemäß dem Ausführungsbeispiel sind die Plattenelemente rechteckig. In der unteren Reihe sind ebenso wie in den folgenden beiden darüber liegenden Reihen jeweils acht Plattenelemente 2 so angeordnet, daß ihre langen Seiten 3 bzw. 4 senkrecht und ihre kurzen Seiten 5 bzw. 6 waagerecht verlaufen. In der obersten Reihe sind dagegen die langen Seiten 3 bzw. 4 horizontal und die kurzen Seiten 5 bzw. 6 vertikal angeordnet.

Zwischen je zwei benachbarten Platten 2 befindet sich eine horizontale Fuge 7 bzw. eine vertikale Fuge 8. An den langen Seiten sind die benachbarten Platten vier Mal miteinander verbunden, während an den kurzen Seiten benachbarte Platten nur zwei Mal miteinander verbunden werden.

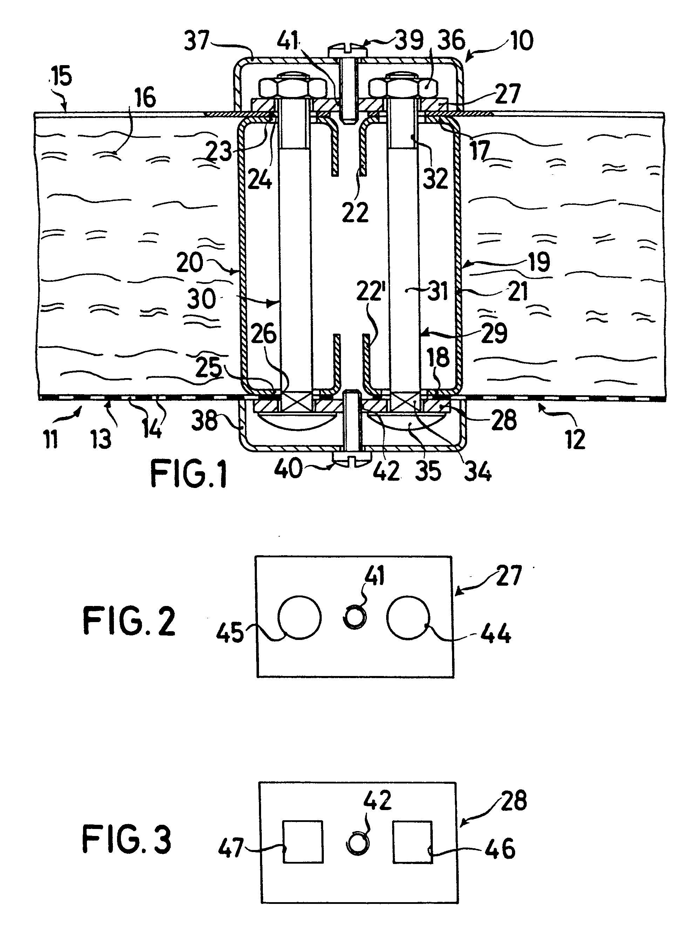

Eine solche Verbindung, die allgemein mit 10 bezeichnet ist, verbindet die beiden in Figur 1 im Schnitt wiedergegebenen benachbarten Platten, die dort mit 11 bzw. 12 bezeichnet sind. Diese Platten bestehen aus einer innen, d. h. der Lärmquelle zugeordneten Platte 13 mit Perforationen 14 und einer Außenplatte 15, wobei zwischen Innenplatte 13 und Außenplatte 15 eine oder mehrere Einlagen aus schalldämmenden Werkstoff, z. B. aus Mineralwolle, angeordnet sind, was allgemein mit 16 bezeichnet ist. Die Ränder der Platten 13 und 15 liegen auf den Schenkeln 17 bzw. 18 von Randleisten 19 bzw. 20. Diese Randleisten sind gemäß der Figur 1 C-förmig profiliert, wobei die langen Stege 21 die Einlage 16 abdecken und die kurzen Stegenden 22 bzw. 22' außen liegen.

In den Platten 13, 15 sowie in den Schenkeln 17, 18 befinden sich fluchtende Bohrungen 23-26, die gemäß dem Ausführungsbeispiel gleiche Durchmesser aufweisen und z. B. mit einer Handbohrmaschine an Ort und Stelle hergestellt sein können, um die Montage der Befestigungseinrichtung 10 vorzubereiten.

Diese Befestigungseinrichtung hat eine ebene Außenplatte 27 und ebenfalls ebene Innenplatte 28. Zur Befestigungseinrichtung gehören ferner zwei gleiche Schraubenbolzen 29, 30. Bei dem Ausführungsbeispiel handelt es sich um genormte Schrauben, die demzufolge einen glatten Schaftabschnitt 31, ein Gewindeende 32, einen Vierkantabschnitt 34 und einen flachen Kopf 35 aufweisen. Der Vierkant liegt unmittelbar unter dem Kopf 35. Auf das Gewinde 32 läßt sich eine Sechskantmutter 36 aufschrauben. Schließlich gehört zur Befestigungseinrichtung eine allgemein U-förmig profilierte Abdeckleiste 37 für die außen liegenden Teile der Befestigung 10 und eine ihr entsprechende, d. h. kongruente Abdeckleiste 38 für die innen liegenden Befestigungselemente. Die Abdeckleisten werden mit Hilfe von Schlitzkopfschrauben 39, 40 befestigt, für die mit Gewinde versehene Bohrungen 41, 42 in den Platten 27, 28 vorgesehen sind.

Wie die Darstellung der Figuren 2 und 3 zeigt, sind die Platten rechteckförmig und kongruent. Die Außenplatte 27 nach Figur 2 hat Ausnehmungen 44 bzw. 45 mit kreisförmiger Umrißlinie, z. B. Bohrungen, deren Durchmesser das Einführen der Gewindeenden 32 der Schraubenbolzen 29 gestattet. Auf der Mitte zwischen beiden Bohrungen 44, 45 liegt die Gewindebohrung 41, die zum Festziehen der Abdeckleiste 37 mit der Schlitzkopfschraube 39 dient.

Nach Figur 3 ist die innen liegende Platte 28 mit Ausnehmungen 46 und 47 versehen, die eine viereckige Umrißlinie besitzen und das Einstecken des Vierkantes 34 jeder Schraube 29, 30 ermöglichen. Zwischen der Vierkantausnehmungen 46, 47 befindet sich die Gewindebohrung 42 für die Schlitzkopfschraube 40.

Zur Montage bedarf es lediglich der Ausfluchtung der Ausnehmungen 44, 45 bzw. 46, 47 mit den Bohrungen 23, 24 bzw. 25, 26, worauf die Schraubenbolzen 29, 30 in der aus Figur 1 ersichtlichen Zuordnung so weit eingeführt werden, daß sich die Muttern aufschrauben lassen. Danach können die Abdeckungen 37, 38 mit Hilfe der Schlitzkopfschrauben 39, 40 montiert werden. In der umgekehrten Reihenfolge läßt sich die Befestigung 10 auch jederzeit demontieren.

Nach der Montage verspannen die Schraubenbolzen 29 und 30 die Platten 13, 15 zusätzlich mit den C-Profilen 19, 20. Ein zwischen die Abdeckprofile und die anschließenden Teile eingebrachtes Profil zur Vermeidung von Schallbrücken kann vorgesehen werden, ist aber nicht dargestellt.

**Ansprüche**

1. Vorrichtung zum Aufbau von Schallschutzwänden (1) oder -kabinen aus rasterweise zusammengebauten, schallschluckenden Plattenelementen (2, 11, 12) mit Randleisten (19, 20), bei der wenigstens einer der Elementenseiten (15, 13) ein sich auf benachbarten Randleisten (19, 20) abstützender Klemmbügel (27, 28) und wenigstens ein durchgreifender Schraubenbolzen (29, 30) zur Verspannung der eine Fuge begrenzenden Elemente vorgesehen ist, welche gegebenenfalls mit einer aufschraubbaren Leiste (37, 38) abdeckbar ist, dadurch gekennzeichnet, daß jeder Klemmbügel aus einer Platte (27, 28) besteht, von denen die eine Platte (28) je eine polygonalen Umriß aufweisende Ausnehmungen (46, 47) für jeweils einen Mehrkant aufweist, der unter dem Kopf des Schraubenbolzens (29, 30) angeordnet ist, der eine der Randleisten (19, 20) durchdringt und mit einer aufgeschraubten Mutter (36) verspannbar ist, und daß die Platten (27, 28) zwischen ihren von zueinander parallelen Schraubenbolzen (29, 30) besetzten Aussparungen eine mit Gewinde versehene Bohrung (41, 42) zum Festziehen einer zum Aufschrauben der Fugenabdeckleiste (37, 38) dienenden Kopfschraube (39, 40) versehen ist.

2. Vorrichtung nach Anspruch 1, dadurch gekennzeichnet, daß die andere von beiden miteinander zusammenwirkenden Platten (27) je eine Ausnehmung (44, 45) mit rundem Umriß für je einen der Schraubenschäfte aufweist und beide Platten (27, 28) kongruent, sowie als Rechteckplatten ausgebildet sind.

**Claims**

1. System for the construction of soundproof walls (1) or soundproof compartments out of soundabsorbing panels (2, 11, 12) assembled together in the manner of a lattice, with edge strips (19, 20), in which at least one of the panel sides (15, 13) is provided with a clamp strap (27, 28) supported on adjacent edge strips (19, 20) and with at least one penetrating screw bolt (29, 30) to connect the panels adjacent a space at a join, which can if required be covered by a moulding (37, 38) that can be screwed on, characterised in that each clamp strap consists of a plate (27, 28), of which one plate (28) has cut-outs (46, 47) having in each case a polygonal outline, each for a polyhedron that is provided under the head of the screw bolt (29, 30), which penetrates one of the edge strips (19, 20) and can be tensioned by screwing on a nut (36) ; and that the plates (27, 28), between their cut-outs occupied by screw bolts (29, 30) parallel to one another, are provided with a threaded hole (41, 42) to secure a cap bolt (39, 40) serving to screw on the moulding (37, 38) covering the space at the join.

2. System according to Claim 1, characterised in that the other of the two plates (27) that function together has in each case a circular cutout (44, 45) for each of the screw shanks and both plates (27, 28) are configured congruently as well as in the form of right-angles plates.

**Revendications**

1. Dispositif pour le montage de parois (1) ou de cabines à absorption acoustique constituées par des éléments de plaque (2, 11, 12) amortissant les bruits et assemblées en forme de réseau, comportant des baguettes marginales (19, 20), au moins une traverse de serrage (27, 28) qui s'appuie sur des baguettes marginales voisines (19, 20) et sur l'un des côtés (15, 13) des éléments et au moins un boulon traversant (29, 30) étant prévu pour le serrage des éléments limitant un joint, ce joint pouvant être également recouvert par une bande (37, 38) vissable, caractérisé en ce que chaque traverse de serrage est constituée par une plaque (27, 28), l'une (28) des plaques comprenant des évidements (46, 47) à pourtour polygonal destinés respectivement à un profilé polygonal prévu au-dessous de la tête du boulon (29, 30) qui traverse l'une des baguettes marginales (19, 20) et peut être serré au moyen d'un écrou (36) vissé sur lui, et en ce que les plaques (27, 28) sont munies entre leurs évidements par lesquels passent les boulons parallèles (29, 30) d'un alésage (41, 42) pourvu d'un filetage et destiné à la fixation d'une vis à tête (39, 40) servant au vissage de la bande de recouvrement de joint (37, 38).

2. Dispositif selon la revendication 1, caractérisé en ce que l'autre (27) des deux plaques qui coopèrent l'une avec l'autre comprend un évidement respectif (44, 45) à pourtour circulaire destiné à l'une des tiges des boulons et en ce que les deux plaques (27, 28) sont constituées de façon correspondante sous forme de plaques rectangulaires.

FIG.1

FIG.2

FIG.3

1

# FIG. 4